# EUROPEAN PATENT APPLICATION

(11) **EP 1 930 145 A1**
(43) Date of publication of application: **11.06.2008**
(21) Application number: 06811164.0
(22) Date of filing: 27.09.2006
(51) Int. Cl.: B29C 33/02, B29C 33/46, B29C 35/02, B29L 30/00

(54) **TIRE VULCANIZATION METHOD AND TIRE VULCANIZATION APPARATUS**

(30) Priority: 28.09.2005 JP 2005281943
(71) Applicant: Ichimaru Giken Co., Ltd., Chikugo-shi, Fukuoka 833-0016 (JP)
(72) Inventor: ICHIMARU, Hironobu, Chikugo-shi Fukuoka 833-0016 (JP)
(74) Representative: Ilgart, Jean-Christophe
(86) International application number: PCT/JP2006/319824
(87) International publication number: WO 2007/037506

(57) **Abstract**

The present invention provides method and apparatus for tire vulcanization which can smoothly separate a bladder from the inner surface of a vulcanized tire by quickly detaching the bladder therefrom to contract it, when separating the bladder from the inner surface of the vulcanized tire by contracting the bladder after the vulcanizing. In the method in which a green tire (G) set in a die is vulcanized in a state that the green tire (G) is pressed into an inner surface of the die by inflating a bladder (30) with a fluid for heat/pressure application and attaching the bladder (30) in an inner surface of the green tire (G), when separating the bladder (30) from the inner surface (g1) of the vulcanized tire by contracting the bladder after the vulcanizing, detachment of the bladder (30) is facilitated by flowing a fluid between the outer surface (30a) of the bladder therefrom.

## Description

### TECHNICAL FIELD

The present invention relates to a tire vulcanization method and a tire vulcanization apparatus, particularly to a bladder detachment technique for detaching, after vulcanization, a bladder from the inner surface of a vulcanized tire by contracting the bladder.

### BACKGROUND ART

Generally, tires are vulcanized by attaching, in the inner surface of a green tire set in a die, a bladder inflated with supplied fluid for heat/pressure application to vulcanize the green tire in a state that the green tire is pressed into the inner surface of the die.

In such a tire vulcanization method, after the green tire is molded by vulcanization, the bladder has to be separated from the inner surface of the vulcanized tire by discharging the fluid for heat/pressure application from the inside of the bladder to contract it. However, since the outer surface of the bladder is tightly attached to the inner surface of the vulcanized tire, there may occur an incident that the bladder cannot be detached from the inner surface of the vulcanized tire.

This causes some problems that the bladder cannot be contracted, the contraction thereof takes a lot of time, or not only the bladder but the vulcanized tire are pulled off from the die causing a difficulty in the following processes.

In the prior art, Japanese Laid-open Patent Application Publication No. Hei 5-116151 has proposed a tire vulcanization method in which in attaching, in the inner surface of a green tire set in a dire, a bladder inflated with a supplied fluid for heat/pressure application, suction is performed between the bladder and the green tire by a negative-pressure source in order to get the bladder closely in contact with the inner surface of the green tire.

This prior art method aims to get the bladder closely in contact with the inner surface of the green tire and employs the suction by the negative-pressure source as a solution. Therefore, the object and solution thereof is completely different from those of the present invention.

### DISCLOSURE OF THE INVENTION

In view of solving the above problems, the present invention aims to provide tire vulcanization method and apparatus which can smoothly separate a bladder from the inner surface of a vulcanized tire by quickly detaching the bladder therefrom to contract it when separating the bladder therefrom by contracting the bladder after vulcanization.

In view of solving the above problems, a tire vulcanization method according to the present invention (claim 1) is a method in which a green tire set in a die is vulcanized in a state that the green tire is pressed into an inner surface of the die by inflating a bladder with a fluid for heat/pressure application and attaching the bladder in an inner surface of the green tire. The method is configured to comprise the step of when the bladder is separated from the inner surface of the vulcanized tire by contracting the bladder after the vulcanizing, flowing a fluid between the outer surface of the bladder and the inner surface of the green tire to thereby facilitate detachment of the bladder therefrom.

Further, a tire vulcanization apparatus according to the present invention (claim 2) is formed so as to vulcanize a green tire set in a die in a state that the green tire is pressed into an inner surface of the die by inflating a bladder with a fluid for heat/pressure application and attaching the bladder in an inner surface of the green tire, in which a fluid flow channel to flow a fluid between an outer surface of the bladder and the inner surface of the vulcanized tire is formed; and detachment of the bladder from the inner surface of the vulcanized tire is facilitated by flowing a fluid through the fluid flow channel between the outer surface of the bladder and the inner surface of the vulcanized tire after the vulcanizing, when the bladder is separated from the inner surface of the vulcanized tire by contracting the bladder.

Furthermore, a tire vulcanization apparatus according to the present invention (claim 3) is formed to facilitate detachment of the bladder from the inner surface of the vulcanized tire by forcibly flowing a fluid through the fluid flow channel between the outer surface of the bladder and the inner surface of the vulcanized tire.

### BRIEF DESCRIPTION OF THE DRAWINGS

FIG. 1 is a process drawing for describing a vulcanization method using a tire vulcanizer according to a first embodiment;
FIG. 2 is a process drawing for describing a vulcanization method using the tire vulcanizer according to the first embodiment;
FIG. 3 is a process drawing for describing a vulcanization method using the tire vulcanizer according to the first embodiment;
FIG. 4 is a cross section of a tire vulcanizer according to a second embodiment; and
FIG. 5 is a cross section of a tire vulcanizer according to a third embodiment.

### BEST MODE FOR CARRYING OUT THE INVENTION

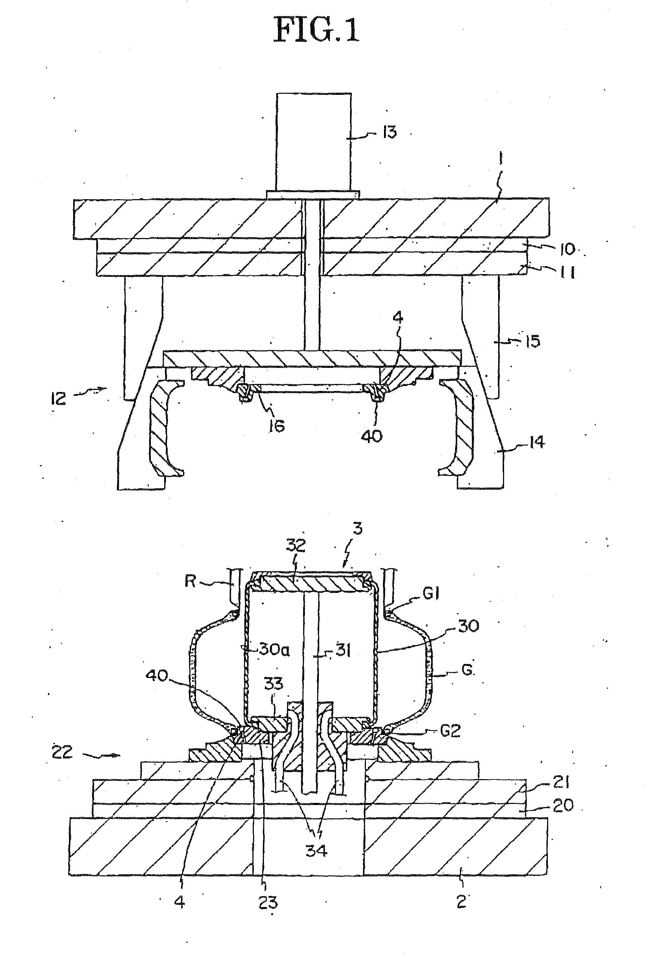

FIGs. 1 to 3 show process drawings for describing a vulcanization method using a tire vulcanizer according to the first embodiment.

As shown in FIG. 1, the tire vulcanizer according to the first embodiment comprises an upper container 12 (upper die) mounted in a bolster plate 1 via an insulator bolster 10 and a bolster platen 11, and a lower container 22 (lower die) mounted in a bottom plate 2 via an insulator bottom 20 and a bottom platen 21. The bolster plate 1 and the bottom plate 2 are supported in such a manner as to relatively move in a vertical direction.

In the present embodiment, it is configured that the bottom plate 2 is fixed and the bolster plate 1 is elevated/descended by a not-shown cylinder body.

The upper container 12 has an elevation cylinder 13 mounted in the bolster plate 1 and the elevation cylinder 13 has mounted therein a segment mold 14 which is divided into plural segments so that as the elevation cylinder 13 elevates or descends, the segment mold 14 expands or shrinks radially along an expandable guide 15.

Also, in the center portion of the upper container 12 an upper bead ring 16 is provided to retain an upper bead portion G1 of a green tire G.

The lower container 22 is mounted on the bottom plate 2 to retain the green tire G with the segment mold 14, and provided in the center thereof with a center mechanism 3 having a bladder 30.

Also, in the center of the lower container 22 a lower bead ring 23 is provided to retain a lower bead portions G2 of the green tire G.

The center mechanism 3 is configured to comprise a center post 31 ascending/descending by a cylinder (not shown), an upper clamp ring 32 provided at the upper end of the center post 31, a lower clamp ring 33 fixed in the center portion of the lower container 22, and a bladder 30 made of inflatable tubular rubber. The upper end of the bladder 30 is fixed to the upper clamp ring 32 while the lower end thereof is fixed to the lower clamp ring 33.

Further, the center mechanism 3 has supply/discharge channels 34 formed therein to supply/discharge a high-temperature and pressure fluid for heat/pressure application to/from the inside of the bladder 30.

Further, fluid flow channels 4 through which a fluid (air) flows between the outer surface 30a of the bladder and the inner surface g1 of a vulcanized tire g are formed in the upper bead rings 16 and the lower bead rings 23.

Here, the fluid flow channel 4 of the upper bead ring 16 is formed to penetrate from the upper to lower surfaces of the upper bead ring 16, and it is communicated at its lower end with a circular groove 40 formed in the lower surface of the upper bead ring 16 and is open to the atmosphere at its upper end.

The fluid flow channel 4 of the lower bead ring 23 is formed to penetrate from the lower to upper surface of the lower bead ring 16, and it is communicated at its upper end with a circular groove 40 formed on the upper surface of the lower bead ring 23 and is open to the atmosphere at its lower end.

Note that the number of the fluid flow channels 4 is singular or plural. With plural fluid flow channels 4, they are provided with equal interval.

In order to vulcanize the green tire G with the tire vulcanizer according to the present embodiment, the green tire G is captured by a loader R and set at the center of the vulcanizer while the bladder 30 is extended, as shown in FIG. 1. Here, a lower bead portion G2 of the green tire G is supported by the upper surface of the lower bead ring 23.

Next, a fluid for heat/pressure application is supplied to the bladder 30 of the center mechanism 3 through the supply/discharge channels 34 in order to inflate the bladder 30. This makes the outer surface of the bladder 30 tightly in contact with the inner surface of the green tire G to shape the green tire G.

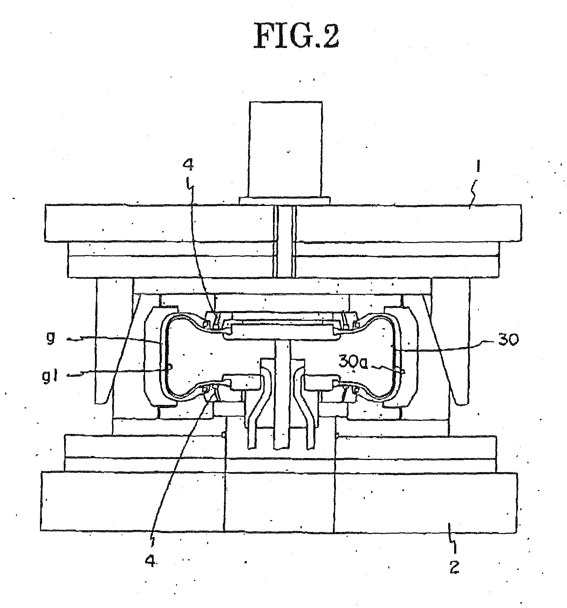

After the green tire G is shaped as above, the shaped green tire is held by the upper and lower containers 12, 22 by lowering the bolster plate 1 and shrinking the upper container 12 as shown in FIG. 2.

In this state, the fluid for heat/pressure application is supplied to the inside of the bladder 30 through the supply/discharge channels 34 so as to vulcanize the green tire G using heat from the bladder 30 and heat from the containers 12, 22.

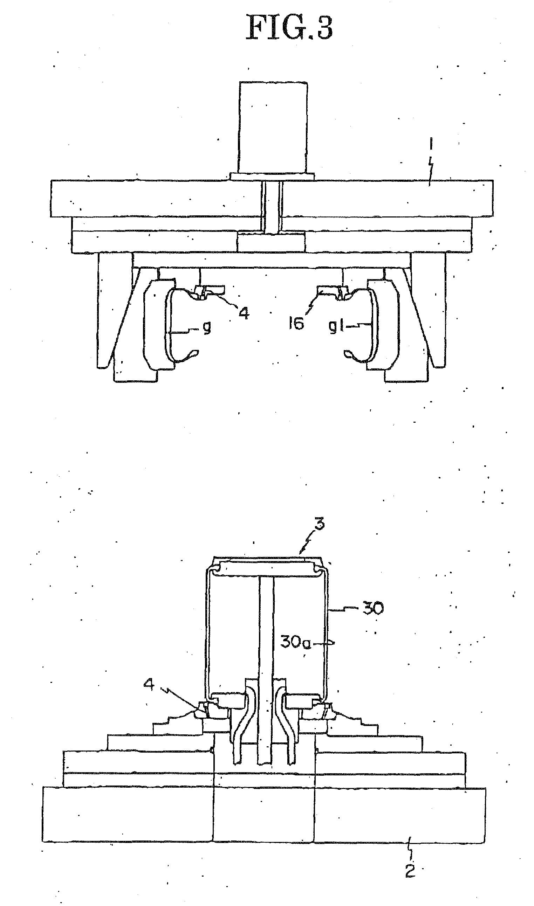

After the vulcanization of the green tire G as above, as shown in FIG. 3, the supply/discharge channels 34 are opened with the upper container 12 kept shrunk, to discharge the fluid for heat/pressure application from the inside of the bladder 30 to contract it, thereby separating the bladder 30 from the inner surface g1 of the vulcanized tire g.

When the bladder 30 starts contracting, a fluid (air) flows between the outer surface 30a of the bladder 30 and the inner surface g1 of the vulcanized tire g which have been in tight contact with each other.

As described above, the flow of the fluid between the outer surface 30a of the bladder 30 and the inner surface g1 of the vulcanized tire g makes it possible to quickly detach the bladder 30 therefrom and contract the bladder 30. In this manner, the bladder 30 can be smoothly separated from the inner surface g1 of the vulcanized tire g.

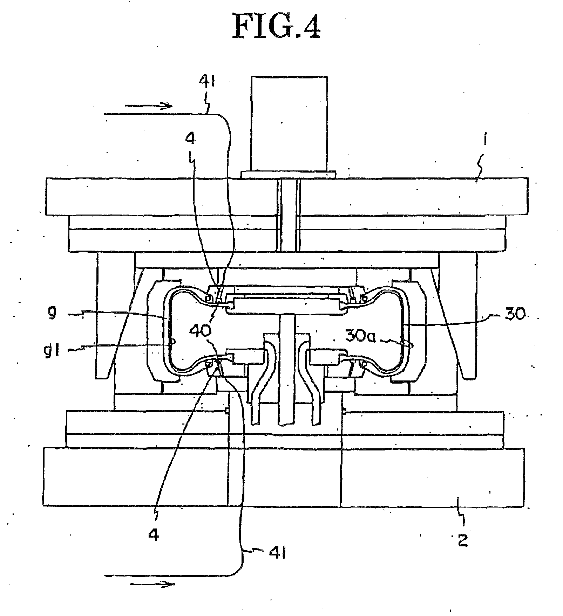

Next, FIG. 4 is a cross section of the tire vulcanizer according to the second embodiment.

The tire vulcanizer according to the second embodiment is different from that in the first embodiment in that the fluid flow channels 4 are connected with a fluid supply device (not shown) via pipes 41.

By connecting the fluid flow channels 4 with the fluid supply device, it is possible to forcibly flow the fluid between the outer surface of the bladder 30 and the inner surface g1 of the vulcanized tire g.

The rest of the structure of the tire vulcanizer is the same as that in the first embodiment.

As above, it is made possible to flow a sufficient amount of fluid even through a small fluid flow channel 4 by forcibly flowing the fluid and to form the fluid flow channel 4 in smaller size accordingly.

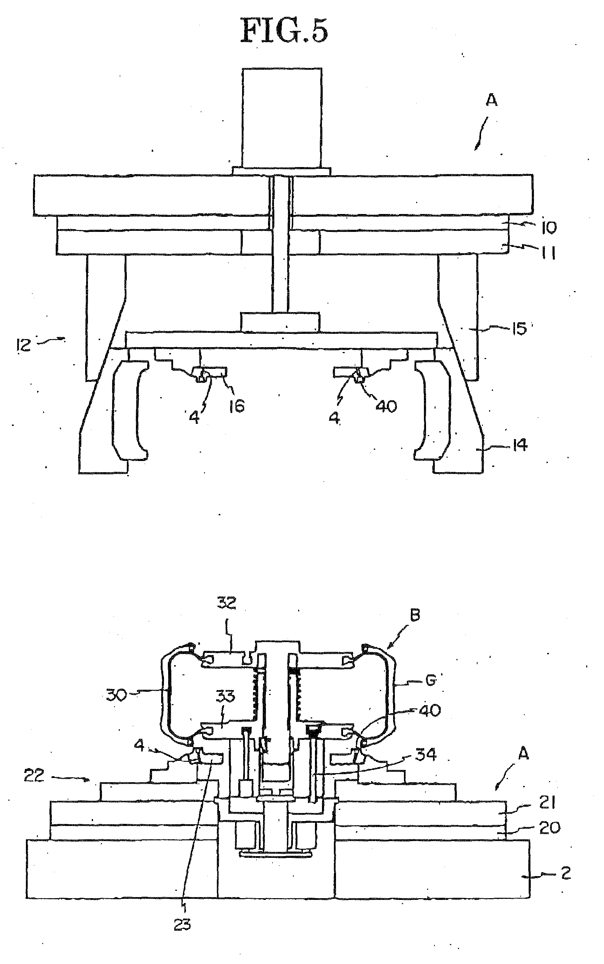

Next, FIG. 5 is a cross section of the tire vulcanizer according to the third embodiment.

The tire vulcanizer according to the third embodiment comprises a vulcanizer body A and a shaping unit B.

That is, it is configured that the green tire G is shaped using the shaping unit B outside the vulcanizer body A; thereafter, the shaping unit B is moved and set in the vulcanizer body A to vulcanize the green tire G.

The shaping unit B comprises a bladder 30 made of an inflatable tubular rubber, an upper clamp ring 32 fixing the upper end of the bladder 30, a lower clamp ring 33 fixing the lower end of the bladder 30, and a supply/discharge channel 34 to supply/discharge a high-temperature and pressure fluid for heat/pressure application to/from the inside of the bladder 30.

In the center portion of the upper container 12 of the vulcanizer body A, an upper bead ring 16 is provided while a lower bead ring 23 is provided in the center portion of the lower container 22. Similarly to the first embodiment, the fluid flow channels 4, 4 are formed in the upper and lower bead rings 16, 23.

In vulcanization, first, the green tire G is mounted in the shaping unit B outside the vulcanizer body A. Then, while the bladder 30 is held at an extended position, the green tire G is fitted into the outer circumference of the bladder 30. Thereafter, the outer surface of the bladder 30 is made in tight contact with the inner surface of the green tire G for shaping the green tire G by supplying the fluid for heat/pressure application into the bladder through the supply/discharge channel 34.

After vulcanizing the green tire G, the supply/discharge channel 34 is opened with the upper container 12 kept shrunk, to discharge the fluid for heat/pressure application from the inside of the bladder 30 to contract the bladder 30, thereby separating the bladder 30 from the inner surface of the vulcanized tire.

Here, when the bladder 30 starts contracting, a fluid (air) is flowed through the fluid flow channels 4 between the outer surface of the bladder 30 and the inner surface of the vulcanized tire which have been in tight contact with each other. This makes it possible to quickly detach the bladder 30 from the inner surface of the vulcanized tire to contract the bladder.

Note that the tire vulcanizer according to the third embodiment can also be configured as in the second embodiment that the fluid flow channels 4 are connected with the fluid supply device via the pipe to forcibly flow the fluid between the outer surface of the bladder and the inner surface of the vulcanized tire.

Further, in the tire vulcanizer according to the present invention, the fluid flow channel is preferably formed in both of the upper and lower bead rings although it can be formed in either of them.

### INDUSTRIAL AVAILABILITY

The tire vulcanization method (claim 1) and apparatus (claim 2) according to the present invention are characterized by allowing a fluid (for example, air) to flow between the outer surface of the bladder and the inner surface of the vulcanized tire when the bladder is separated from the vulcanized tire by contracting the bladder after the vulcanization.

The fluid flow between the outer surface of the bladder and the inner surface of the vulcanized tire as above makes it possible to quickly detach the bladder therefrom for contraction of the bladder, thereby smoothly separating the bladder therefrom.

Accordingly, it is possible to shorten a cycle time taken for the tire vulcanization operation and improve productivity.

Further, according to the tire vulcanization apparatus (claim 3) according to the present invention, the forcible fluid flow between the outer surface of the bladder and the inner surface of the vulcanized tire makes it possible to flow a sufficient amount of fluid (for example, air) even through a small fluid flow channel and to form a fluid flow channel in smaller size.

## Claims

1. A tire vulcanization method in which a green tire set in a die is vulcanized in a state that the green tire is pressed into an inner surface of the die by inflating a bladder with a fluid for heat/pressure application and attaching the bladder in an inner surface of the green tire, the method **characterized by** comprising the step of
when the bladder is separated from the inner surface of the vulcanized tire by contracting the bladder after the vulcanizing, flowing a fluid between the outer surface of the bladder and the inner surface of the green tire to thereby facilitate detachment of the bladder therefrom.

2. A tire vulcanization apparatus which is formed so as to vulcanize a green tire set in a die in a state that the green tire is pressed into an inner surface of the die by inflating a bladder with a fluid for heat/pressure application and attaching the bladder in an inner surface of the green tire, the apparatus **characterized in that**:
a fluid flow channel to flow a fluid between an outer surface of the bladder and the inner surface of the vulcanized tire is formed; and
detachment of the bladder from the inner surface of the vulcanized tire is facilitated by flowing a fluid through the fluid flow channel between the outer surface of the bladder and the inner surface of the vulcanized tire when the bladder is separated from the inner surface of the vulcanized tire by contracting the bladder after the vulcanizing.

3. A tire vulcanization apparatus according to claim 2, **characterized in that**
detachment of the bladder from the inner surface of the vulcanized tire is facilitated by forcibly flowing a fluid through the fluid flow channel between the outer surface of the bladder and the inner surface of the vulcanized tire.
